# EUROPEAN PATENT SPECIFICATION

(11) **EP 2 667 185 B1**
(45) Date of publication and mention of the grant of the patent: **14.05.2014**
(21) Application number: 12382212.4
(22) Date of filing: 25.05.2012
(51) Int. Cl.: G01N 25/72, G01N 21/88

(54) **Method and system for the inspection of pallets**
Methode und Vorrichtung zur Prüfung von Paletten
Méthode et dispositif pour l'inspection de palettes

(43) Date of publication of application: 27.11.2013
(73) Proprietor: Mecanica Cape, S.L., 08560 Manlleu (Barcelona) (ES)
(72) Inventor: Perez Toneu, Juan Manuel, 08503 GURB (BARCELONA) (ES); Perez Toneu, Carlos, 08560 MANLLEU (BARCELONA) (ES); Perez Toneu, Marc, 08500 VIC (BARCELONA) (ES); Almudevar Felipe, Eulogio Juan Antonio, 08224 TERRASSA (BARCELONA) (ES)
(74) Representative: Durán-Corretjer, S.L.P.

(56) References cited:
- WO-A1-2005/058717
- AU-A1- 2007 203 347
- JP-A- 9 159 432
- JP-A- 9 159 433

## Description

This invention refers to a method for detecting defects in pallets and to a system to carry out the said method.

More specifically, this invention refers to a method for detecting defective pallets and to a system for carrying out the said method.

A pallet is a platform of boards for storing and carrying goods, which facilitates lifting and handling the said goods by using cranes. Often referred to in the industry as "pallet" ("palet" or "paleta"). This type of platforms is produced by arranging in parallel a series of lengthwise planks and at a given distance from each other and thereafter imbedding, also in parallel, a series of crosswise planks and at a given distance from each other on the said lengthwise planks. However, many times after the production method, some defects can exist in the imbedding in the said pallets and the use of the pallets having the said defects can provoke that the pallet breaks or is prematurely damaged and can cause accidents in the processes of goods storage and carriage.

Different processes and systems for detecting the defects in the pallets are known.

The application for a Spanish Patent with publication number ES2117575 refers, for example, to a method and system for automatically recognising and classifying defects in pallets or similar elements. The method is comprised of a first process of capturing an image of a pallet consisting in suitably lighting the pallet, picking up the image, digitalizing it and dumping it in a computer for a further processing. Thereafter, the profiles of the pallet are determined to be able to identify it, obtaining its sizes and highlighting the defects. For that purpose, an operation of enhancing and increasing the contrast of the original image of the pallet and a histogram automatic thresholding of the enhanced image is carried out. For all of this, the system is comprised of a chain automatic conveyor belt which crosses a camera provided with a lighting system having a set of eight video cameras. On the conveyor belt, two turning devices are provided adapted to turning the pallet in order that the other side of the pallet can be checked. However, the said standard 8 video cameras method and system do not allow the detection of different types of pallets having different shades. A conventional lighting such as that of the application for a Spanish Patent ES2117575 does not allow to correctly detecting the darker woods because of the lack of contrast.

Another example of pallet automated checking and repairing method is disclosed in WO 2005058717 and EP 1636104 A1. The said application discloses a cell and a method for the pallet automated checking and repairing. In the process of checking a pallet an alternative and preferred method is disclosed consisting of using a laser system and a camera for capturing individual profiles (cross sections) of the pallet, that means that the camera records the location of a laser line projected and triangulates its position to provide height and coordinates data. The said method provides the pallet 3-D data map and can be used to detect recesses or protrusions such as nails, hanging plastics, etc. Also, the 3-D data can be filtered by using algorithms of image analysis (such as the Sobel or Gauss filters) to provide locations of cracks or other deviations in the pallet surfaces. Although the said method allows to correctly detecting the woods having different modalities compared with the application for the Spanish Patent ES2117575, the method and system of the application for the European Patent EP1636104 A1 do not allow distinguishing whether the protruding element is a nail, a wood chip, hanging plastics, etc. Therefore, it does not allow detecting defective pallets.

Thus, it should be convenient to find a method allowing to overcome the above disadvantages. More specifically, it is an object of this invention to disclose a method for detecting defects in the nailing of pallets and a system for carrying out the said method allowing assuring the utmost and effective detection of defective nailing. Namely, a system which can pick out the defects of the pallet surface, corresponding to metal elements (such as nails), from the variability of the natural surface of the pallet wood.

According to this invention, this is achieved by means of a method for detecting defective pallets comprising the following steps: capturing dimensional data of the said pallet by means of at least an optical camera and/or at least a laser meter; processing the data obtained in the capturing process by means of a data processor obtaining a 3-D map of the said pallet; processing the data of that map for determining at least some coordinates of location of recesses and protrusions of the said pallet corresponding to defects to be repaired, characterized in that it is comprised of the steps of: heating of said pallet by means of a heating system based on electromagnetic induction; capturing of at least a thermal image of the said pallet previously heated by means of at least an infrared camera; processing of the thermal image by means of a data processor to obtain coordinates of elements in that higher temperature pallet; jointly processing of the said coordinates of location and of the said coordinates of temperature elements by means of a data processor for detecting defects in the pallet. When heating the pallet through a process based in electromagnetic induction and thereafter capturing a thermal image of the said pallet, the location of the nails in the pallet can be assured without any error.

According to a preferred embodiment of the heating process, a series of subassembly of coils, each subassembly being arranged aligned with each lengthwise plank of the said pallet, carries out a heating by electromagnetic induction respectively of the intersections of each lengthwise plank of the said pallet. Preferably, each subassembly of coils lasts 1 second in heating one intersection between a lengthwise plank and a pallet lengthwise plank. Preferably, each subassembly lasts 4 seconds in heating all the intersections of a same pallet lengthwise plank.

Heating the pallet is carried out by electromagnetic induction because some advantages are obtained with respect to other systems: no physical contact, heating generation at the required place, no losses in calorific transfers, maximum speed and accuracy, easy automation and control of the operating cycle, at 85% high electric effectiveness.

According to a preferred embodiment of the process of capturing thermal images of the said previously heated pallet, a series of infrared cameras, each infrared camera arranged aligned with each lengthwise plank of the said pallet, carries out a capture of at least a thermal image respectively of the intersections of each lengthwise plank of the said previously heated pallet. This way, it is achieved to obtaining the information as a thermal image of the intersections between the lengthwise planks and the crosswise planks, in which the nails of the pallet are located.

According to another preferred embodiment of the invention, for each intersection between lengthwise planks and crosswise planks of a pallet, first this heating process is carried out and thereafter the said process of capturing the thermal image by means of a system formed by a coil head joined to a thermal capture head.

According to a preferred embodiment of the process of thermal images processing, it detects in each thermal image at least coordinates corresponding to an element in the said pallet the temperature of which is higher than the temperature surrounding the said element.

According to a preferred embodiment, in this joint processing of the said coordinates of location of recesses or protrusions and the said coordinates of temperature elements, the said data processor compares both types of coordinates and determines that there exists a defect in the pallet in the coordinate coinciding with the said coordinates of location of recesses or protrusions and with the said coordinates of temperature elements. Thus, it can be clearly determined that a nail, corresponding to a coordinate of a temperature element coinciding with a coordinate of location of recesses or protrusions, has a defect.

Preferably, after detecting defects in the said pallet, an information displaying system generates as many labels as defects have been detected in the pallet and sticks each label in the location of the defect in the pallet. Thus, showing in the pallet checked the location of the defective nails is achieved.

According to another feature of this invention, the said method can be carried out by using a system for detecting defects in nails in pallets comprised of: at least a pallet to be checked; at least an optical camera and/or rat least a laser adapted to carry out a pallet dimensional data collection; a data processing module adapted to processing the data obtained in the collecting process, obtaining a 3-D map of the said pallet and the said 3-D map data processing for determining at least coordinates of location of recesses or protrusions of the said pallet corresponding to defects to be repaired, **characterized in that** it is comprised of: a heating system based in electromagnetic induction adapted to carry out the heating of the said pallet; at least an infrared camera adapted to capture at least a thermal image of the said previously heated pallet; a data processing module adapted to processing the thermal image and obtaining coordinates of elements in the said pallet having a higher temperature; a data processing module adapted to jointly processing the said coordinates of location and the said coordinates of temperature elements and detecting defects in the pallet.

According to a preferred embodiment of the heating system, it is comprised of: a primary alternate power supply adapted to supply the said heating system from a connection to the mains; at least one rectifier connected to the said primary power supply adapted to transform the alternate current supplied by the said primary supply into direct current; at least a subassembly of coils adapted to heat at least an intersection between lengthwise planks and crosswise planks of a pallet; at least a converter of direct current into alternate current connected to the output of the rectifier and adapted to supplying alternate current to at least a subassembly of coils; a programmable logic controller connected at least to a converter and at least to a rectifier adapted to control the said heating system.

According to a preferred embodiment of the invention, the said converter of direct current into alternate current is of the multiphase type adapted to supply alternate current to several subassemblies of coils.

According to a preferred embodiment of the arrangement of the pallet in the input of the system, the said pallet to be checked is arranged oriented in the direction of its longitudinal axis with respect to the input of the heating system. When the pallet is entering in the heating system in the direction of its longitudinal axis, minimising the number of coils to be used is achieved.

According to a preferred embodiment of the heating system, this system has available a series of subassemblies of coils, a subassembly for each lengthwise plank of the said pallet, so that each subassembly of coils can carry out a heating by electromagnetic induction of the intersections of a same lengthwise plank of the said pallet.

According to a preferred embodiment, an infrared camera is available for each subassembly of coils of each lengthwise plank of the said pallet, so that each infrared camera can carry out a capture of at least one thermal image respectively of the intersections of each lengthwise plank of the said previously heated pallet.

According to another preferred embodiment of the invention, the said subassembly of coils for each lengthwise plank is comprised of, joined thereto a thermal vision head to jointly carry out a heating process and thereafter a thermal image capture.

According to a preferred embodiment, the said subassembly of coils is comprised of at least two circular type coils adjacent to each other.

According to a preferred embodiment, the said subassembly of coils is comprised of at least two hexagonal type coils adjacent to each other.

According to a preferred embodiment of the current converter, it is based in a resonant half-bridge inverter type topology including two MOSFET type transistors and that the said converter is connected at its output to a resonant tank formed by a coupling transformer and a series of condensers arranged in series with a subassembly of coils and in that the said converter is controlled by a control circuit.

According to a preferred embodiment of the said control circuit, it is comprised of a signals generating circuit for these MOFSET transistors, an overcurrent protection circuit and a circuit of communication with the said programmable logic controller.

According to a preferred embodiment of the said generating signals circuit for the said MOSFET transistors, it is comprised of: a phase shifting circuit; an analogical circuit to follow up the resonance frequency connected to the output of the said phase shifting circuit; a signal generating circuit of a retard signal connected to the output of the said analogical circuit to follow up the resonance frequency; a driver type circuit connected to the output of the said retard signal generating circuit and generating the attack signals for the MOSFET transistors.

According to a preferred embodiment of the said overcurrent protection circuit, it is comprised of: a full wave rectifying circuit based in operational amplifiers; an amplitude detector, a comparator with hysteresis adapted to detect both a short circuit and an open circuit; a memorizing circuit adapted to indicate the presence of failures in the programmable logic controller.

The system includes in addition an information displaying system connected to the output of the system detecting the failures in the pallets adapted to generate as many labels as defects detected in the pallet and to stick each label in the location of the defect in the pallet.

Preferably, all the circuits forming part of the system detecting defects in pallets have the output signals optocoupled. Thus, it is achieved to electrically isolate different signals of the system.

For a best understanding are included, as an explanatory but no limiting example, several figures disclosing the different parts of several preferred embodiments of this invention.
Figure 1 shows a general diagram of a heating system according to a preferred embodiment of this invention.
Figure 2 shows an enlarged view of a part of the general diagram of Figure 1.
Figure 3 shows a diagram of a type of coil according to a preferred embodiment of the invention.
Figure 4 shows a diagram of a type of coil according to another preferred embodiment of the invention.
Figure 5 shows a diagram of connection of a type of converter from direct current into alternate current according to a preferred embodiment of the invention.
Figure 6 shows a block diagram of the converter control circuit of Figure 5 according to a preferred embodiment of the invention.
Figure 7 shows a block diagram of the circuit generating attack signals to the transistors of Figure 6 according to a preferred embodiment of the invention.
Figure 8 shows a block diagram of the overcurrent protection circuit of Figure 6 according to a preferred embodiment of this invention.
Figure 9 shows a diagram of a triangulation system according to a preferred embodiment of the invention.
Figure 10 shows an example of displaying information of defects in a pallet according to a preferred embodiment of the invention.

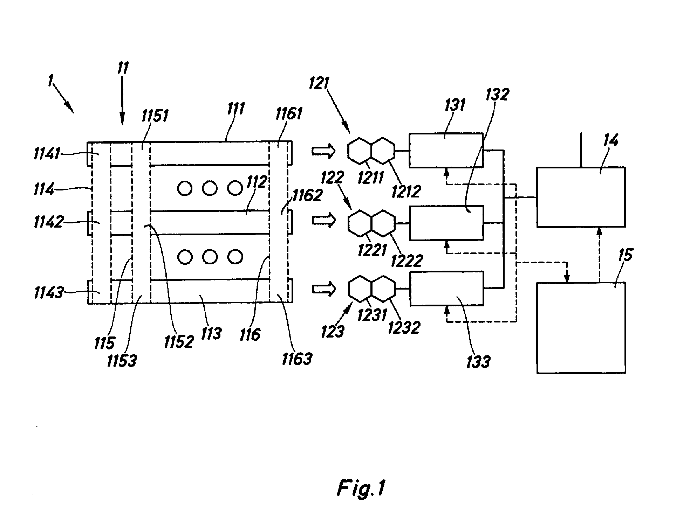

Figure 1 shows a general diagram of a heating system - 1- based in electromagnetic induction. The electromagnetic induction heating is a method to supply heat in a quick consistent clean and effective way in manufacturing applications, in metal parts or portions or other electricity conductors.

The basic principles of the electromagnetic induction are well known: an electric current circulates through a coil shaped conductor (inductor) generating a magnetic field around. The highest intensity of the field occurs in the coil core, and depends of the intensity of the excitation current and of the number of spires of the coil. If an element of ferromagnetic material is located within a variable intensity magnetic field, electric currents are inducted in it, mainly concentrated in the surface, named parasite or Foucault currents. These currents are closed within it forming vortices and are responsible of generating heat by Joule effect. The alternate magnetic field also produces successive material magnetisations and demagnetisations which are traduced by successive hysteresis cycles, which also produce losses in the form of heat.

The heating system -1- based in electromagnetic induction of Figure 1 is comprised of a pallet -11-composed of a series of lengthwise planks, preferably three (-111-, -112- , -113-), and a series of crosswise planks (-114-, -115-, ..., -116-) arranged above the said lengthwise planks (-111-, -112-, -113-). The number of crosswise planks can vary depending on the length of the lengthwise planks (-111-, -112-, -113-). In the Figure 1, suspension points appear to indicate that more than three crosswise planks are available (-114-, -115-, ..., -116-). The said crosswise planks (-114-, -115-, ..., -116-) are arranged on the said lengthwise planks (-111-, -112-, -113-) so that the said pallet -11- is rectangular shaped. Also, the said crosswise planks (-114-, -115-, ..., -116) are joined to the said lengthwise planks (-111-, -112-, -113-) by means of nails in the intersections created between them. Thus, for the lengthwise plank -111-a minimum of three intersections (-1141-, -1151-, ..., - 1161-) are available with the respective crosswise planks (-114-, -115-, ..., -116-). For the lengthwise plank -112-, a minimum of three intersections (-1142-, -1152-, ..., - 1162-) are available with the respective crosswise planks (-114-, -115-, ..., -116-). Last, for the lengthwise plank -113-, a minimum of three intersections (-1143-, -1153-, ..., -1163-) are available with their respective crosswise planks (-114-, -115-, ..., -116-).

The heating system -1- based in the electromagnetic induction of Figure 1 is comprised in addition of a primary power supply (not shown), in charge of supplying the system -1- from the connection to the mains, a rectifier -14- and a series of static converters or power converters (-131-, -132-, -133-) which supply stand alone coils (-121-, -122-, -123-).

The said rectifier -14- receives the alternate current or AC from the primary power supply, usually at a 220V voltage and a 50H frequency and transforms it into direct current or DC. The said rectifier -14- may be three-phase or single-phase and should generate sufficient power in direct current and have the corresponding normal protections.

The static converters (-131-, -132-, -133-) of the system -1- receive the direct current from the rectifier - 14- and adapt it for the coils (-121-, -122-, -123-). Thus, the said converters (-131-, -132-, -133-) convert the direct current received from the rectifier -14- into alternate current.

The system -1- also comprises a programmable logic controller or PLC (Programmable Logic Controller in its English acronym) -15- which is in charge of carrying out the system -1- control manoeuvres, turning in and out both the power and the control of the power converters (-131-, - 132-, -133-), according to the full machine operation. The communication of the programmable logic controller -15-with the heating system -1- is carried out through digital inputs/outputs.

According to a preferred embodiment of the invention corresponding to Figure 1, the heating system -1- is based in a single rectifier -14- connected to the mains and supplying direct current to three power converters (-131-, -132-, -133-). The said rectifier -14- may be a standard single-phase type commercial unit or of a three-phase type with output direct current voltage adjustment. The said three power converters (-131-, -132, -133-) supply each a pair of bobbins (-1211-, -1212-), (-1221-, -1222-), (-1231-, -1232-) of induction respectively in three stand alone lines, one for each lengthwise plank (-111-, -112-, - 113-), so that all the nails of a pallet -1- may be heated as they are exiting from the corresponding producing machine.

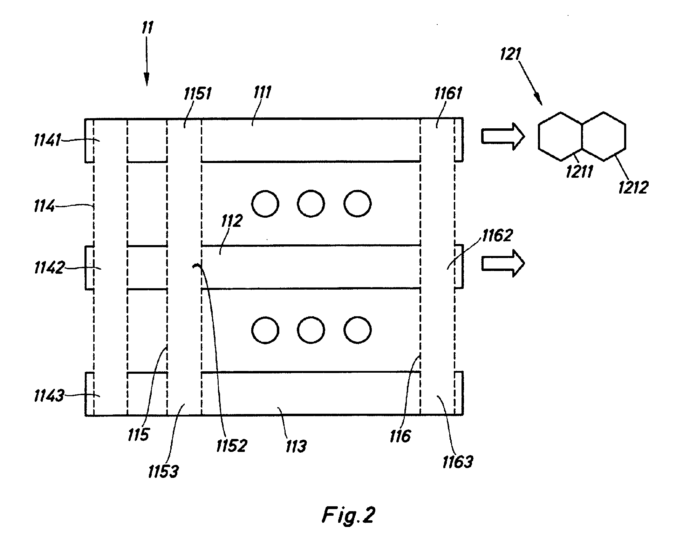

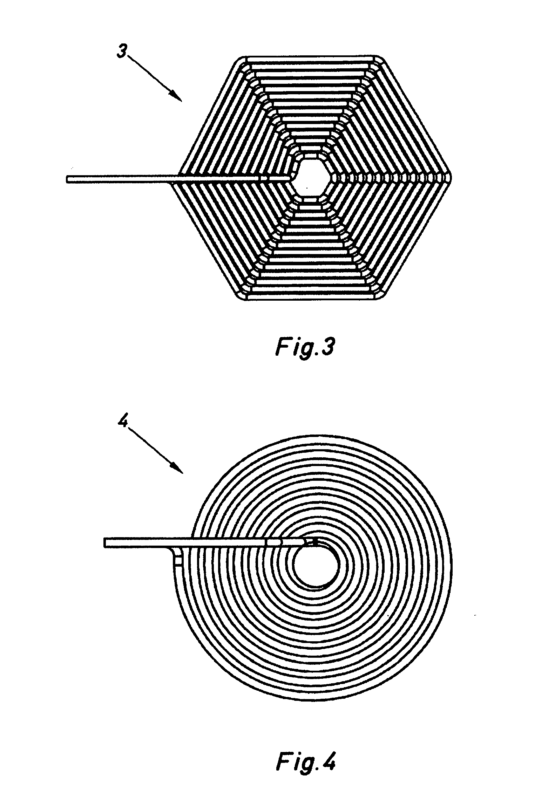

Figure 2 shows a reduced view of the general diagram of Figure 1, in which the induction coil -121- head can be seen preferably comprised of 2 coils (-1211-, -1212-), preferably hexagonal and preferably 160x200 mm sized. Each pair of coils (-1211-, -1212-), (-1221-, -1222-), (-1231-, -1232-) can have different geometries. Thus, a preferred embodiment is the flat hexagonal coil -3-, as it can be seen in Figure 3, and which is used in the embodiment of the system -1- of Figures 1 and 2. This type of flat hexagonal coil -3- is optimal as for its adaptability to the heating surface. Another preferred embodiment of the coil is the flat circular coil -4- as it can be seen in Figure 4 and which possesses very good thermal properties, due to its flow-volume ratio.

Another preferred embodiment of the invention allows to arrange the said 3 pairs of coils (-121-, -122-, -123-) sharing the output of a single multiphase power converter (not shown).

Another preferred embodiment of the invention allows having a single coil available for each lengthwise plank (not shown).

Another preferred embodiment of the invention allows having a 3-coil block available for each lengthwise plank (not shown).

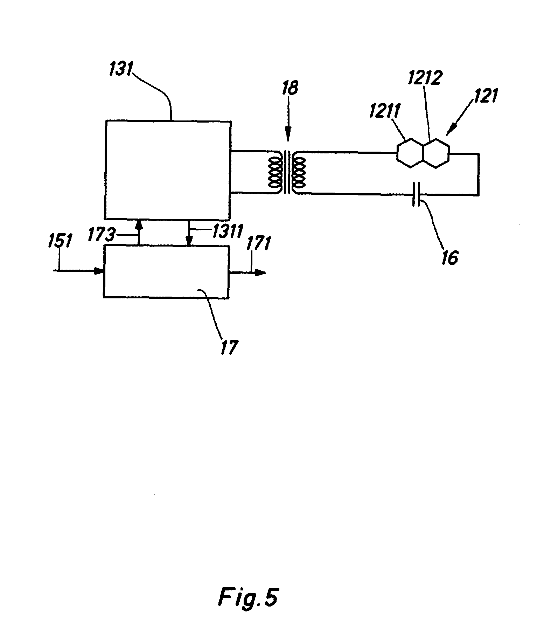

Figure 5 shows a connection diagram of a type of direct current to alternate current converter or power converter (-131-, -132-, -133-) according to a preferred embodiment of the invention. This type of converter -131-is based in a topology of resonant half-bridge inverter which is connected at its output to a resonant tank formed by a coupling transformer -18- , with a vortices ratio N:1 and a series of condensers -16- arranged in series with the pair of hexagonal coils (-1211-, -1212).

The main function of the said type of resonant half-bridge converter -131- is to produce, at the output, an alternate current sine signal having a magnitude and frequency which can be controlled. The structure of the said resonant half bridge converter -131- is comprised of two condensers having the same value, connected in series through a direct current input signal, so that each condenser is charged at half the input voltage. Also, this type of converter -131- is comprised of two transistors of metal-oxide-semiconductor field-effect or MOSFET transistors (from its English acronym Metal-Oxide-Semiconductor Field-Effect Transistor), arranged in the circuit so that the two MOSFET transistors can never be active at the same time.

This converter -131- is controlled by a control circuit -17- receiving control input signals -151- from the programmable logic controller -15-. The said control circuit -17- communicates with the resonant half bridge inverter type converter -131- through the signals - 173- and -1311-. The signals -173- correspond to the attack signals for the MOSFET transistors (not shown) composing the circuit of this resonant half bridge inverter type converter -131- while the signals -1311- correspond to the average current measured by the said converter -131.

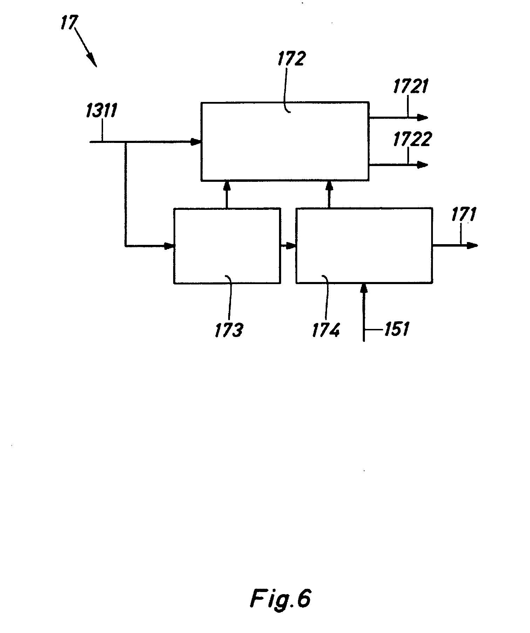

Figure 6 shows a block diagram of the control circuit -17- of the type of converter -131- of Figure 5, according to a preferred embodiment of the invention. The said circuit -17- is comprised of a circuit -172- generating signal for the said MOSFET transistors and a circuit -173-for protecting of overcurrent received by both signals - 1311- corresponding to the current measured by the said converter -131-. In addition, the said circuit -17- is comprised of a circuit -174- of communication with the said programmable logic controller -15- through the signal -151-. The said circuit -174- also communicates the possible alarms for overcurrent or for a low level of current of the converter -131-through the signals -171-.

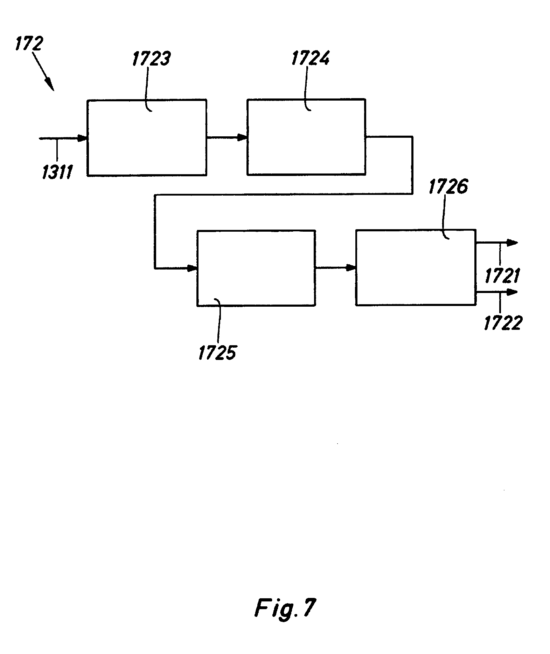

The figure 7 shows a block diagram of the circuit - 172- generating the attack signals to the MOSFET transistors of the figure 6, according to an embodiment of this invention. The said circuit -172- comprises a 90° phase shifting circuit -1723- receiving the signals - 1311-corresponding to the current measured by the said converter -131-, an analogical circuit -1724- for the follow up of the resonance frequency connected to the output of the said phase shifting circuit -1723- and a retard time generating circuit -1725- connected to the output of the said analogical circuit -1724- to following up the resonance frequency. The said circuit -1725- generates a retard time to retard the start of MOSFET transistor while the other is shut. At the output of the said analogical circuit -1724- a driver type circuit -1726- is connected to isolate the control signals of the attack signals (-1721-, -1722-) between the gate and the source of each MOSFET transistor.

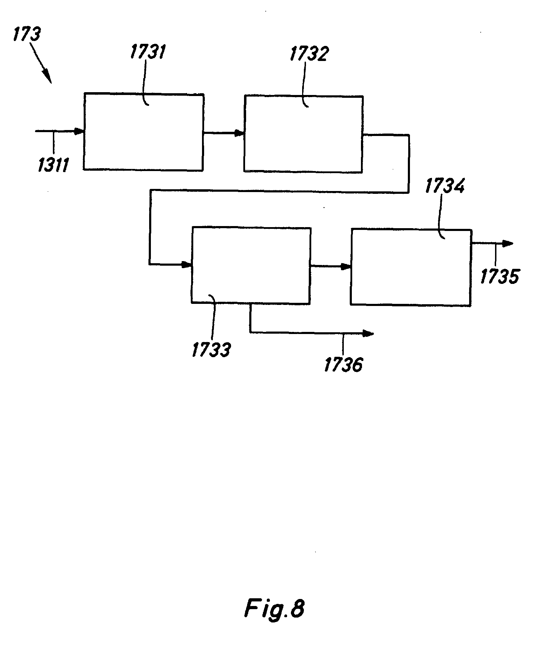

Figure 8 shows a block diagram of the overcurrent protecting circuit -173- of Figure 6, according to an embodiment of this invention. The said overcurrent protecting circuit -173- is comprised of a full wave rectifier circuit -1731- based in operational amplifiers, a amplitude or peak detector -1732- , a comparator -1733-with hysteresis adapted to detect as well a short circuit as an open circuit as that the inverter commutation frequency is very far from the resonance frequency. In the case of an open circuit or that the inverter commutation frequency is very far from the resonance frequency, it corresponds in both cases to a very low current level and the said signal -1736- will be transmitted to the programmable logic controller -15-. Last, the said circuit -173- is comprised of a memorization circuit -1734- adapted to indicate the presence of failures to the programmable logic controller -15- . This circuit -1734-, in the event of overcurrent, memorizes a bit in a bistable or flip flop, indicating the presence of a failure in the system.

The previously analysed communications between the programmable logic controller -15- and the rest of the circuits must all be optocoupled, so, the said signals of the system can be electrically isolated.

Another object of this invention is to provide a thermal images capturing system adapted to carry out captures of at least one thermal image of the said heated pallet -11- and showing thus the differences of temperature between the nails and the planks of the pallet -11-. The said thermal images capturing system is comprised of a thermal images capturing head for each pair of coils (-121-, -122-, -123-) of each lengthwise plank respectively (-111-, -112-, -113-)
so that each head can carry out a thermal image capture of each intersection of a same lengthwise plank of the pallet. This arrangement of a thermal images capturing head for each pair of coils (-121-, -122-, -123-) allows carrying out the heating process and the thermal images capture at the same time. Thus, the thermal images capturing system is comprised of 3 heads. The resolution of the thermal image capture is selected so that elements having a diameter over two pixels can be detected.

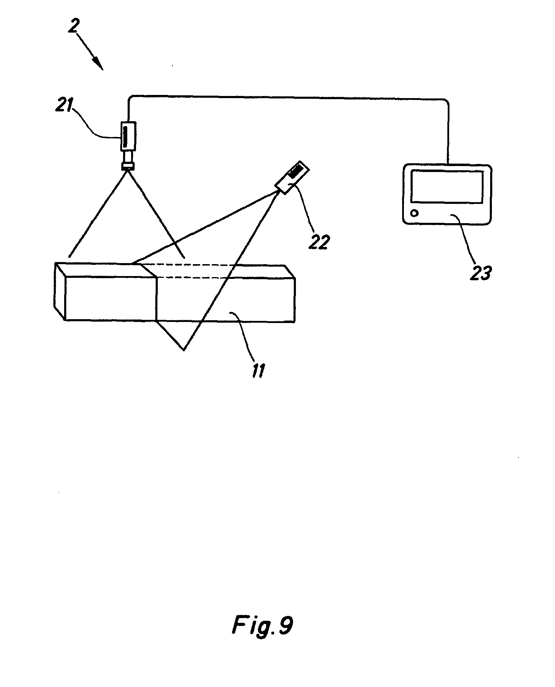

Figure 9 shows a triangulation system -2- adapted to carry out a process of the pallet individual profiles captures. This system -2- is comprised of an optical camera -21- uprightly arranged and a laser meter -22- arranged with a given slope, as it can be seen in Figure 9. The said system -2- consists in the projection of a laser line -22- on the top surface of the pallet, while the said camera -21- records the location of the said projected laser line -22- and triangulates its position to provide data of height and coordinates. The said system -2-provides a number of images which, transformed by means of a data processor, determine the heights of the different points and a 3-D data map of the pallet -11- is achieved.

An object of this invention is to provide a method to detecting defects in nails in pallets. This method can be started, after each pallet -11- to be checked exited from its production process and system. For the said system, a pallet -11- is considered, such as that of Figures 1 and 2, comprised of 3 lengthwise planks (-111-, -112-, -113-), and an undetermined series of crosswise planks (-114-, -115-, ..., -116-).

Thus, in a first step, a pallet -11- recently exited from the production machine is in process of entering the system -1- oriented in the direction of the longitudinal axis of the said pallet -11-. The said entrance in the system -1- can be comprised of a positioning stop (not shown), so that all the pallets of a same model start the control in the same arrangement, the position of the crosswise planks of each pallet being thus determined. This system -1- can be in addition comprised of a positioning control system (not shown) of the pallets capable of detecting whether a pallet arrives askew and thereafter correctly adjusting the positioning of the said pallet.

In a following step, the pallet -11- is being positioned under three pairs of coils (-121-, -122-, -123-) and these later carry out, in a first stage, a heating process by electromagnetic induction of the intersections (-1161-, -1162-, -1163-) between the crosswise plank -116- and the lengthwise planks (-111-, - 112-, -113-) respectively. After this heating process by the said coils (-121-, -122-, -123-), a thermal image capture is carried out for each heated intersection (-1161-, -1162-, -1163-) by means of a series of infrared cameras (not shown), respectively joined to each pair of coils (-121-, -122-, -123-). The approximate length of the heating process and image capturing process for each crosswise plank (-114-, -115-, ..., -116-) is around 1 second. After the said two processes, a movement of the pallet is carried out until locating the next crosswise plank of the same pallet -11- under the three pairs of induction coils (-121-, -122, -123-). The heating process is iteratively repeated for the respective intersections of each crosswise plank. The length of the cycle of the heating system and the thermal images capture is approximately 6 seconds, of which 4 are used to sweeping the full pallet, heating the nails and carrying out the thermal captures.

In a following step, a thermal image processor receives the information of all the captured thermal images of all the intersections existing in the pallet -11- and for each image detected, the coordinates of a position in the pallet the temperature of which is higher than the temperature surrounding that position. Thus, obtaining a list of the coordinates of the nails existing in the intersections between the lengthwise planks and the crosswise planks of the pallet -11- is achieved, which is stored for a further processing.

In a later step, the said pallet -11- enters in a triangulation system -2- adapted to carry out a process of the said pallet -11- individual profiles capture. The said system -2- is comprised of an optical camera -21- uprightly arranged and a laser meter -22- arranged with a given slope, as it can be seen in Figure 9. The said system -2-consists in the projection of a laser line -22- on the top surface of the pallet while the said camera -21- records the location of the said laser line -22- projected and triangulates its position to provide the data of height and coordinates of the defective elements of the pallet -11-such as recesses or protrusions of nails, hanging plastics, etc. The said system -2- provides a number of images by which, transformed by means of a data processor, are determined the heights of the different points and a 3-D data map of the pallet -11- is obtained. The coordinates of the said protrusions or recesses are stored for a further processing.

Before starting this last triangulation step, it is necessary to carry out a gauging process. The objective of the said gauging is to be able to obtain a 3-D reconstruction of the pallet with its real sizes.

The gauging protocol is based in placing a known dimensional grid in the laser -22- plane. At first, the camera -21- captures an image of the said grid and from it, it is possible to know which real coordinate corresponds to each pixel of the image. The method to be carried out to implement the said gauging is as follows:
1. Detecting the grid line crossing;
2. Allocating the real coordinates to each line crossing;
3. Interpolating the real coordinates of other pixels of the image starting from the crossing;

To carry out the said gauging process, it is necessary to have 3 sets of camera plus a laser, one for measuring in the "x" direction, another for measuring in the "y" direction and the third, also in the "x" direction for the area of nails, with higher resolution (it will be located under the other sets).

In the following step, an image and data processor carries out the process of comparing between the coordinates of position of the nails in the pallet and the coordinates of the pallets recesses and protrusions of the pallet -11-. When the coordinates of a nail are coincident with the coordinates of a protrusion or of a recess, it can be determined that there exists a defect in the said nail of the pallet -11 (protruding nail or sunk nail). The detection of all the defects in the existing nails is carried out and the coordinates of the said defective nails are stored.

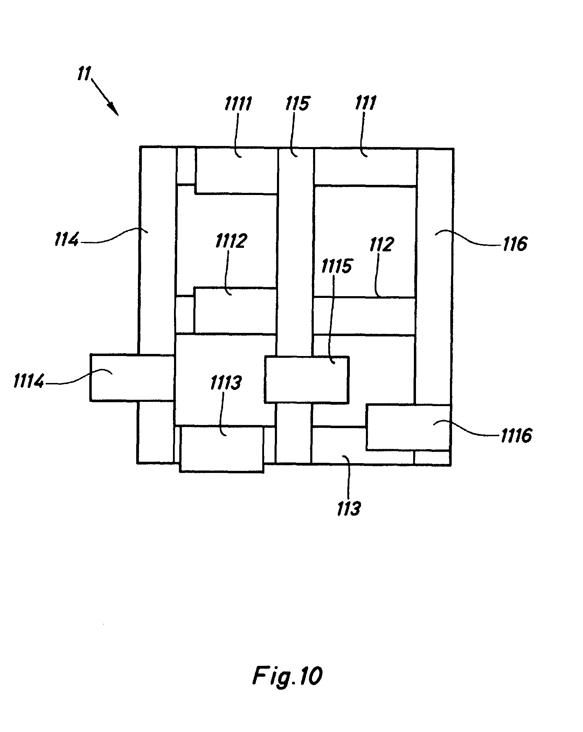

In the last step, the information display of the defects in the pallet -11- is carried out by means of a system which generates as many labels as defects have been detected in the pallet and it sticks them in the respective location (thanks to the coordinates of the defect) of the defect in the pallet -11-. Figure 10 shows an example of information display of defects in a pallet according to a preferred embodiment of the invention.

## Claims

1. Method for detecting defective pallets (11) comprising the following steps:
- capturing dimensional data of the said pallet (11) by means of at least an optical camera (21) and/or at least a laser (12) meter;
- processing the data obtained in the capturing process by means of a data processor obtaining a 3-D map of the said pallet (11);
- processing the data of that map to determine at least some coordinates of location of recesses and protrusions of the said pallet (11) corresponding to defects to be repaired, **characterized in that** it is comprised of the steps of:
- heating that pallet (11) by means of a heating system (1) based in electromagnetic induction;
- capturing at least a thermal image of the said pallet (11) previously heated by means of atleast an infrared camera;
- processing the thermal image by means of a data processor to obtain coordinates of elements **in that** pallet (11) having a higher temperature;
- jointly processing the said coordinates of location and the said coordinates of temperature elements by means of a data processor for detecting defects in the pallet (11).

2. Method according to the claim 1 **characterized in that** in the said heating process a series of subassemblies (121, 122, 123) of coils, each subassembly (121, 122, 123) arranged aligned with each lengthwise plank (111, 112, 113) of the said pallet (11), carries out a heating by electromagnetic induction respectively of the intersections of each lengthwise plank (111, 112, 113) of the said pallet (11).

3. Method according to any of the claims 1 to 2, **characterized in that**, in the said capture of thermal images, a series of infrared cameras, each infrared camera arranged aligned with each lengthwise plank (111, 112, 113) of the said pallet (11), carries out a capture of at least a thermal image respectively of the intersections of each lengthwise plank (111, 112, 113) of the said previously heated pallet (11).

4. Method according to the claim 1 **characterized in that** in this thermal images processing, the said thermal images processor detects, in each thermal image, at least coordinates corresponding to an element in the said pallet (11) the temperature of which is higher than the temperature surrounding the said element.

5. Method according to the claim 1 **characterized in that** in this joint processing of the said coordinates of location of recesses or protrusions and of the said coordinates of temperature elements, the said processor compares both types of coordinates and determines that there exists a defect in the pallet (11) **in that** coordinate coinciding with the said coordinates of location of recesses or protrusions and with the coordinates of temperature elements.

6. Method according to any of the preceding claims **characterized in that** after detecting defects in the said pallet (11), a system displaying information generates as many labels as defects have been detected in the pallet (11) and sticks each label in the location of the defect in the pallet (11).

7. System adapted to carry out a method, according to claims 1 to 6, which is comprised of:
- at least an optical camera (21) and/or at least a laser (12) adapted to carry out the said pallet (11) dimensional data collection;
- a data processing module adapted for:
- processing the data obtained in the collecting process, obtaining a 3-D map of the said pallet (11);
- processing the data of the said 3-D map to determining at least coordinates for the location of recesses or protrusions of the said pallet (11) corresponding to defects to be repaired; **characterized in that** it is comprised of:
- a heating system (1) based in electromagnetic induction adapted to carry out the heating of the said pallet (11);
- at least an infrared camera adapted to capturing at least a thermal image of the said previously heated pallet (11);
- a thermal images processing module adapted to process the thermal image and obtaining coordinates of elements in the said pallet (11) having a higher temperature;
- a data processing module adapted to jointly process the said coordinates of location and the said coordinates of temperature elements and detecting defects in the pallet (11).

8. System, according to the claim 7, **characterized in that** the said heating system (1) is comprised of:
- a primary alternate power supply adapted for supplying the said heating system (1) from a connection to the mains;- at least one rectifier (14) connected to the said primary power supply adapted to transform the alternate current supplied by the said primary supply into direct current;
- at least a subassembly (121, 122, 123) of coils adapted for heating at least an intersection between lengthwise planks (111, 112, 113) and crosswise planks (114, 115, 116) of a pallet (1);
- at least a converter (131, 132, 133) of direct current to alternate current connected at the output of the rectifier (14) and adapted to supply alternate current to at least a subassembly (121, 122, 123) of coils;
- a programmable logic controller (15) connected at least to a converter (131, 132, 133) and at least to a rectifier (14) adapted to control the said heating system (1).

9. System, according to the claims 7 and 8, **characterized in that** the said pallet (11) to be checked is arranged oriented in the direction of its longitudinal axis with respect to the input of the heating system (1).

10. System according to the claims 7 and 8, **characterized in that** the said heating system (1) has available a series of subassemblies (121, 122, 123) of coils, a subassembly (121, 122, 123) for each lengthwise plank (111, 112, 113) of the said pallet (11), so that each subassembly (121, 122, 123) of coils can carry out a heating by electromagnetic induction of the intersections of a same lengthwise plank (111, 112, 113) of the said pallet (11).

11. System, according to the claims 7 and 10, **characterized in that** an infrared camera is available for each subassembly (121, 122, 123) of coils of each lengthwise plank (111, 112, 113) of the said pallet (11), so that each infrared camera can carry out a capture of at least one thermal image respectively of the intersections of each lengthwise plank (111, 112, 113) of the said previously heated pallet (11).

12. System according to the claim 8, **characterized in that** the said current converter (131, 132, 133) is based in a resonant half-bridge inverter type topology including two MOSFET type transistors and that the said converter (131, 132, 133) is connected at its output to a resonant tank formed by a coupling transformer (18) and a series of condensers (16) arranged in series with a subassembly (121, 122, 123) of coils and **in that** the said converter (131, 132, 133) is controlled by a control circuit (17).

13. System according to claims 7 to 12, **characterized in that** it comprises in addition an information displaying system connected to the output of the system detecting the failures in the pallets (11) adapted to generate as many labels as defects detected in the pallet (11) and to stick each label in the location of the defect in the pallet (11).

14. System according to the claims 8 and 10, **characterized in that** the said subassembly (121, 122, 123) of coils is comprised of at least two circular type coils (4) adjacent to each other.

15. System, according to the claims 8 and 10, **characterized in that** the said subassembly (121, 122, 123) of coils is comprised of at least two hexagonal type coils (3) adjacent to each other.

## Patentansprüche

1. Methode zum Detektieren von defekten Paletten (11), welche die folgenden Schritte umfasst:
- das Aufnehmen räumlicher Daten von der Palette (11) durch Mittel von wenigstens einer optischen Kamera (21) und/oder wenigstens einem Lasermessgerät (12);
- das Verarbeiten der Daten, welche in dem Aufnahmeverfahren erhalten wurden, durch Mittel eines Datenprozessors, welcher eine 3D-Karte der Palette (11) erhält;
- das Verarbeiten der Daten dieser Karte zum Feststellenvon wenigstens einigen Koordinaten von Vertiefungen und Vorwölbungen der Palette (11), welche mit Defekten, die repariert werden müssen, in Verbindung stehen, **dadurch gekennzeichnet, dass** es die Schritte umfasst:
- des Heizens der Palette (11) durch Mittel eines Heizsystems (1), welches auf elektromagnetischer Induktion basiert;
- des Aufnehmens wenigstens eines Wärmebildes der Palette (11), welche zuvor geheizt wurde, durch Mittel von wenigstens einer Infrarotkamera;
- des Verarbeitens des Wärmebildes durch Mittel eines Datenprozessors um Koordinaten von Elementen in dieser Palette (11) zu erhalten, welche eine höhere Temperatur haben;
- des gemeinsamen Verarbeitens der Koordinaten einer Lokalisation und den Koordinaten von Temperaturelementen durch Mittel eines Datenprozessors zum Detektieren von Defekten in der Palette (11).

2. Methode gemäß Anspruch 1, **dadurch gekennzeichnet, dass** in dem Heizverfahren eine Reihe von Unterbaugruppen (121, 122, 123) von Spulen, wobei jede Unterbaugruppe (121, 122, 123) entlang jedeslängs gerichtetenBretts (111, 112, 113) der Palette (11) ausgerichtet ist, ein Heizen durch elektromagnetische Induktion von jeweils den Überschneidungen von jedemlängs gerichtetenBrett (111, 112, 113) von der Palette (11)ausführt.

3. Methode gemäß einem der Ansprüche 1 bis 2, **dadurch gekennzeichnet, dass** bei der Aufnahme des Wärmebildes eine Reihe von Infrarotkameras, wobei jede Infrarotkamera entlang jedeslängs gerichtetenBretts (111, 112, 113) der Palette (11) ausgerichtet ist, eine Aufnahme von wenigstens einem Wärmebild von jeweils den Überschneidungen von jedemlängs gerichtetenBrett (111, 112, 113) von der vorher geheizten Palette (11)ausführt.

4. Methode gemäß Anspruch 1, **dadurch gekennzeichnet, dass** bei der Wärmebildverarbeitung der Wärmebildprozessor in jedem Wärmebild wenigstens solche Koordinaten detektiert, welche in Verbindung mit einem Element in der Palette (11) stehen, dessen Temperatur höher ist als die Temperatur, welche das Element umgibt.

5. Methode gemäß Anspruch 1, **dadurch gekennzeichnet, dass** bei der gemeinsamen Verarbeitung von den Koordinaten von demOrt von Vertiefungen oder Vorwölbungen und von den Koordinaten von den Temperaturelementen der Prozessor beide Typen von Koordinaten vergleicht und bestimmt, dass ein Defekt in der Palette (11) an der Koordinate existiert, welche mit den Koordinaten des Ortes von Vertiefungen und Vorwölbungen und mit den Koordinaten von Temperaturelementen zusammenfällt.

6. Methode gemäß einem der vorangehenden Ansprüche, **dadurch gekennzeichnet, dass** nach dem Detektieren von Defekten in der Palette (11) ein System, welches Information darstellt, so viele Kennzeichen wie Defekte, welche in der Palette (11) detektiert wurden, generiert und jedes Kennzeichne an dem Ort des Defekts an der Palette (11) befestigt.

7. System, welches angepasst ist, um eine Methode gemäß den Ansprüchen 1 bis 6 auszuführen, welche umfasst:
- wenigstens eine optische Kamera (21) und/oder wenigstens einen Laser (12), angepasst, um die räumliche Datensammlung der Palette (11) durchzuführen;
- ein Datenverarbeitungsmodul angepasst für:
- das Verarbeiten von Daten, welche in dem Sammelverfahren erhalten wurden, wobei eine 3D-Karte von der Palette (11) erhalten wird;
- das Verarbeiten der Daten von der 3D-Karte zum Feststellen wenigstens von Koordinaten für den Ort von Vertiefungen und Vorwölbungen der Palette (11), welche mit Defekten in Verbindung stehen, die repariert werden müssen; **dadurch gekennzeichnet, dass** es umfasst:
- ein Heizsystem (1), welches auf elektromagnetischer Induktion basiert, angepasst, um das Heizen der Palette (11) durchzuführen;
- wenigstens eine Infrarotkamera, angepasst, um wenigstens ein Wärmebild von der vorher beheizten Palette (11) aufzunehmen;
- ein Wärmebildverarbeitungsmodul, angepasst, um das Wärmebild zu verarbeiten und Koordinaten von Elementen in der Palette (11) zu erhalten, welche eine höhere Temperatur haben;
- ein Datenverarbeitungsmodul, angepasst, um die Koordinaten des Ortes und die Koordinaten der Temperaturelemente gemeinsam zu verarbeiten und Defekte in der Palette (11) zu detektieren.

8. System gemäß Anspruch 7, **dadurch gekennzeichnet, dass** das Heizsystem (1) umfasst:
- ein erstes Wechselspannungsnetzteil, angepasst zum Versorgen des Heizsystems (1) durch eine Verbindung zum Hauptversorgungsnetz;
- wenigstens einen Gleichrichter (14), verbunden mit dem ersten Netzteil, angepasst, um die Wechselspannung, welche durch das erste Netzteil geliefert wird, in Gleichspannung umzuwandeln;
- wenigstens eine Unterbaugruppe (121, 122, 123) von Spulen, angepasst zum Heizen wenigstens einer Überschneidung zwischen längs gerichtetenBrettern (111, 112, 113) und quer gerichtetenBrettern (114, 115, 116) der Palette (1).
- wenigstens einen Wandler (131, 132, 133) von Gleichspannung zu Wechselspannung, verbunden mit dem Ausgang des Gleichrichters (14) und angepasst, um Wechselspannung für wenigstens eine Unterbaugruppe (121, 122, 123) von Spulen bereitzustellen.
- einen programmierbaren Logikregler (15), verbunden mit wenigstens einem Wandler (131, 132, 133) und wenigstens zu einem Gleichrichter (14), angepasst, um das Heizsystem (1) zu regeln.

9. System gemäß den Ansprüchen 7 und 8. **dadurch gekennzeichnet, dass** die Palette (11), welche untersucht wird, so angeordnet ist, dass sie sich mit der Richtung ihrer Längsachse an dem Einsatz des Heizsystems (1) orientiert.

10. System gemäß den Ansprüchen 7 und 8, **dadurch gekennzeichnet, dass** das Heizsystem (1) eine Reihe von Unterbaugruppen (121,122,123) von Spulen verfügbar hat, eine Unterbaugruppe (121, 122, 123) für jedeslängs gerichteteBrett (111, 112, 113) der Palette (11), so dass jede Unterbaugruppe (121, 122, 123) von Spulen ein Heizen durch elektromagnetische Induktion von den Überschneidungen mit demselben längs gerichtetenBrett (111, 112, 113) von der Palette (11) durchführen kann.

11. System gemäß den Ansprüchen 7 und 10, **dadurch gekennzeichnet, dass** eine Infrarotkamera für jede Unterbaugruppe (121, 122, 123) von Spulen von jedemlängs gerichtetenBrett (111, 112, 113) von der Palette (11) verfügbar ist, so dass jede Infrarotkamera eine Aufnahme von wenigstens einem Wärmebild jeweils von den Überschneidungen von jedemlängs gerichtetenBrett (111, 112, 113) von der vorher geheizten Palette (11) durchführen kann.

12. System gemäß Anspruch 8, **dadurch gekennzeichnet, dass** der Spannungswandler (131, 132, 133) auf einer resonanten Halbbrückenwandler-typischen Topologie, welche zwei MOSFET-Transistoren beinhaltet, basiert und dass der Wandler (131, 132, 133) mit seinem Ausgang mit einem Schwingkreis verbunden ist, der durcheinen Kopplungswandler (18) und eine Reihe von Kondensatoren (16) gebildet wird, die in Reihe mit einer Unterbaugruppe (121, 122, 123) von Spulen angebracht sind, und in dem der Wandler (131, 132, 133) durch eine Regelschaltung (17) geregelt wird.

13. System gemäß den Ansprüchen 7 bis 12, **dadurch gekennzeichnet, dass** es zusätzlich ein Information anzeigendes System umfasst, welches mit dem Ausgang von dem System verbunden ist, welches die Fehler in den Paletten (11) detektiert, angepasst, um so viele Kennzeichen wie an der Palette (11) detektierte Defekte zu generieren und jedes Kennzeichen an dem Ort des Defektes an der Palette (11) zu befestigen.

14. System gemäß den Ansprüchen 8 und 10, **dadurch gekennzeichnet, dass** die Unterbaugruppe (121, 122, 123) von Spulen wenigstens zwei kreisförmige Spulen (4) angrenzend aneinander umfasst.

15. System gemäß den Ansprüchen 8 und 10, **dadurch gekennzeichnet, dass** die Unterbaugruppe (121, 122, 123) von Spulen wenigstens zwei hexagonalförmige Spulen (3) angrenzend aneinander umfasst.

## Revendications

1. Procédé pour détecter des palettes défectueuses (11) comprenant les étapes suivantes :
- la capture de données dimensionnelles de ladite palette (11) au moyen d'au moins une caméra optique (21) et/ou au moins un mètre laser (12) ;
- le traitement des données obtenues dans le processus de capture au moyen d'un processeur de données obtenant une carte 3-D de ladite palette (11) ;
- le traitement des données de cette carte pour déterminer au moins certains coordonnées de localisation de creux et de saillies de ladite palette (11) correspondant à des défauts à réparer, **caractérisé en ce qu'**il est constitué des étapes consistant à :
- chauffer cette palette (11) au moyen d'un système de chauffage (1) basé sur l'induction électromagnétique ;
- capturer au moins une image thermique de ladite palette (11) chauffée précédemment au moyen d'au moins une caméra infrarouge ;
- traiter l'image thermique au moyen d'un processeur de données pour obtenir des coordonnées d'éléments dans cette palette (11) ayant une température plus élevée ;
- traiter conjointement lesdites coordonnées de localisation et lesdites coordonnées d'éléments de température au moyen d'un processeur de données pour détecter des défauts dans la palette (11).

2. Procédé selon la revendication 1, **caractérisé en ce que** dans ledit processus de chauffage d'une série de sous-ensembles (121, 122, 123) de bobines, chaque sous-ensemble (121, 122, 123) agencé aligné avec chaque planche longitudinale (111, 112, 113) de ladite palette (11), effectue un chauffage par induction électromagnétique respectivement des intersections de chaque planche longitudinale (111, 112, 113) de ladite palette (11).

3. Procédé selon l'une quelconque des revendications 1 à 2, **caractérisé en ce que**, dans ladite capture d'images thermiques, une série de caméras infrarouges, chaque caméra infrarouge agencée alignée avec chaque planche longitudinale (111, 112, 113) de ladite palette (11), effectue une capture d'au moins une image thermique respectivement des intersections de chaque planche longitudinale (111, 112, 113) de ladite palette (11) chauffée précédemment.

4. Procédé selon la revendication 1, **caractérisé en ce que** dans ce traitement d'images thermiques, ledit processeur d'images thermiques détecte, dans chaque image thermique, au moins des coordonnées correspondant à un élément dans ladite palette (11) dont la température est supérieure à la température entourant ledit élément.

5. Procédé selon la revendication 1, **caractérisé en ce que** dans ce traitement conjoint desdites coordonnées de localisation de creux ou de saillies et desdites coordonnées d'éléments de température, ledit processeur compare les deux types de coordonnées et détermine qu'il existe un défaut dans la palette (11) dans cette coordonnée coïncidant avec lesdites coordonnées de localisation de creux ou de saillies et avec les coordonnées d'éléments de température.

6. Procédé selon l'une quelconque des revendications précédentes, **caractérisé en ce qu'**après la détection de défauts dans ladite palette (11), un système affichant des informations génère autant d'étiquettes que de défauts qui ont été détectés dans la palette (11) et colle chaque étiquette à l'emplacement du défaut dans la palette (11).

7. Système adapté pour effectuer un procédé, selon les revendications 1 à 6, qui est constitué de :
- au moins une caméra optique (21) et/ou au moins un laser (12) adaptés pour effectuer la collecte de données dimensionnelles de ladite palette (11) ;
- un module de traitement de données adapté pour :
- traiter les données obtenues dans le processus de collecte, en obtenant une carte 3-D de ladite palette (11) ;
- traiter les données de ladite carte 3-D pour déterminer au moins des coordonnées pour la localisation de creux ou de saillies de ladite palette (11) correspondant à des défauts à réparer ; **caractérisé en ce qu'**il est constitué de :
- un système de chauffage (1) basé sur l'induction électromagnétique adapté pour effectuer le chauffage de ladite palette (11) ;
- au moins une caméra infrarouge adaptée pour capturer au moins une image thermique de ladite palette (11) chauffée précédemment ;
- un module de traitement d'images thermiques adapté pour traiter l'image thermique et obtenir des coordonnées d'éléments dans ladite palette (11) ayant une température plus élevée ;
- un module de traitement de données adapté pour traiter conjointement lesdites coordonnées de localisation et lesdites coordonnées d'éléments de température et détectant des défauts dans la palette (11).

8. Système selon la revendication 7, **caractérisé en ce que** ledit système de chauffage (1) est constitué de :
- une source d'alimentation alternative primaire adaptée pour alimenter ledit système de chauffage (1) à partir d'une connexion au secteur ;
- au moins un redresseur (14) connecté à ladite source d'alimentation primaire adapté pour transformer le courant alternatif fourni par ladite alimentation primaire en courant continu ;
- au moins un sous-ensemble (121, 122, 123) de bobines adapté pour chauffer au moins une intersection entre des planches longitudinales (111, 112, 113) et des planches transversales (114, 115, 116) d'une palette (1) ;
- au moins un convertisseur (131, 132, 133) de courant continu en courant alternatif connecté à la sortie du redresseur (14) et adapté pour fournir du courant alternatif à au moins un sous-ensemble (121, 122, 123) de bobines ;
- un contrôleur à logique programmable (15) connecté au moins à un convertisseur (131, 132, 133) et au moins à un redresseur (14) adapté pour contrôler ledit système de chauffage (1).

9. Système selon les revendications 7 et 8, **caractérisé en ce que** ladite palette (11) à vérifier est agencée orientée dans la direction de son axe longitudinal par rapport à l'entrée du système de chauffage (1).

10. Système selon les revendications 7 et 8, **caractérisé en ce que** ledit système de chauffage (1) a à sa disposition une série de sous-ensembles (121, 122, 123) de bobines, un sous-ensemble (121, 122, 123) pour chaque planche longitudinale (111, 112, 113) de ladite palette (11), de sorte que chaque sous-ensemble (121, 122, 123) de bobines puisse effectuer un chauffage par induction électromagnétique des intersections d'une même planche longitudinale (111, 112, 113) de ladite palette (11).

11. Système selon les revendications 7 et 10, **caractérisé en ce qu'**une caméra infrarouge est disponible pour chaque sous-ensemble (121, 122, 123) de bobines de chaque planche longitudinale (111, 112, 113) de ladite palette (11), de sorte que chaque caméra infrarouge puisse effectuer une capture d'au moins une image thermique respectivement des intersections de chaque planche longitudinale (111, 112, 113) de ladite palette (11) chauffée précédemment.

12. Système selon la revendication 8, **caractérisé en ce que** ledit convertisseur de courant (131, 132, 133) est basé sur une topologie de type onduleur en demi-pont résonant comprenant deux transistors de type MOSFET et **en ce que** ledit convertisseur (131, 132, 133) est connecté à sa sortie à un circuit bouchon résonant formé par un transformateur de couplage (18) et une série de condensateurs (16) agencés en série avec un sous-ensemble (121, 122, 123) de bobines et **en ce que** ledit convertisseur (131, 132, 133) est commandé par un circuit de commande (17).

13. Système selon les revendications 7 à 12, **caractérisé en ce qu'**il comprend en outre un système d'affichage d'informations connecté à la sortie du système détectant les défaillances dans les palettes (11) adapté pour générer autant d'étiquettes que de défauts détectés dans la palette (11) et pour coller chaque étiquette à l'emplacement du défaut dans la palette (11).

14. Système selon les revendications 8 et 10, **caractérisé en ce que** ledit sous-ensemble (121, 122, 123) de bobines est constitué d'au moins deux bobines de type circulaire (4) adjacentes l'une à l'autre.

15. Système selon les revendications 8 et 10, **caractérisé en ce que** ledit sous-ensemble (121, 122, 123) de bobines est constitué d'au moins deux bobines de type hexagonal (3) adjacentes l'une à l'autre.
